# EUROPEAN PATENT SPECIFICATION

(11) **EP 3 993 539 B1**
(45) Date of publication and mention of the grant of the patent: **25.06.2025**
(21) Application number: 20850723.6
(22) Date of filing: 30.07.2020
(51) Int. Cl.: H04W 72/04, H04L 5/00

(54) **COMMUNICATION METHOD AND COMMUNICATION DEVICE**
KOMMUNIKATIONSVERFAHREN UND KOMMUNIKATIONSVORRICHTUNG
PROCÉDÉ DE COMMUNICATION ET DISPOSITIF DE COMMUNICATION

(30) Priority: 02.08.2019 CN 201910709758; 30.09.2019 CN 201910941447
(43) Date of publication of application: 04.05.2022
(73) Proprietor: Huawei Technologies Co., Ltd., Longgang District Shenzhen, Guangdong 518129 (CN)
(72) Inventor: JIAO, Shurong, Shenzhen, Guangdong 518129 (CN); HUA, Meng, Shenzhen, Guangdong 518129 (CN)
(74) Representative: Pfenning, Meinig & Partner mbB
(86) International application number: PCT/CN2020/105661
(87) International publication number: WO 2021/023084

(56) References cited:
- WO-A1-2018/227208
- CN-A- 109 644 466
- US-A1- 2018 192 417
- NTT DOCOMO ET AL: "UCI enhancements for URLLC", vol. RAN WG1, no. Reno, USA; 20190513 - 20190517, 4 May 2019 (2019-05-04), XP051708251, Retrieved from the Internet <URL:http://www.3gpp.org/ftp/tsg%5Fran/WG1%5FRL1/TSGR1%5F97/Docs/R1%2D1906212%2Ezip> [retrieved on 20190504]
- HUAWEI ET AL: "UCI enhancements for URLLC", vol. RAN WG1, no. Taipei; 20190121 - 20190125, 20 January 2019 (2019-01-20), XP051592970, Retrieved from the Internet <URL:http://www.3gpp.org/ftp/Meetings%5F3GPP%5FSYNC/RAN1/Docs/R1%2D1900044%2Ezip> [retrieved on 20190120]
- NOKIA ET AL: "On UCI Enhancements for NR URLLC", vol. RAN WG1, no. Reno, Nevada, US; 20190513 - 20190517, 13 May 2019 (2019-05-13), XP051728203, Retrieved from the Internet <URL:http://www.3gpp.org/ftp/Meetings%5F3GPP%5FSYNC/RAN1/Docs/R1%2D1906752%2Ezip> [retrieved on 20190513]
- OPPO: "Summary#2 on UCI enhancements for URLLC", vol. RAN WG1, no. Reno, USA; 20190513 - 20190517, 17 May 2019 (2019-05-17), pages 1 - 20, XP051740050, Retrieved from the Internet <URL:http://www.3gpp.org/ftp/tsg%5Fran/WG1%5FRL1/TSGR1%5F97/Docs/R1%2D1907777%2Ezip> [retrieved on 20190517]
- ZTE: "UL control enhancements for NR URLLC", 3GPP DRAFT; R1-1904144 UL CONTROL ENHANCEMENTS FOR NR URLLC, vol. RAN WG1, 3 April 2019 (2019-04-03), Xi’an, China, pages 1 - 8, XP051707144
- OPPO: "Summary#2 on UCI enhancements for URLLC", 3GPP DRAFT; R1-1907777, vol. RAN WG1, 17 May 2019 (2019-05-17), Reno, USA, pages 1 - 20, XP051740050
- ERICSSON: "On PUCCH/SPUCCH reliability for URLLC", 3GPP DRAFT; R1-1805168 - ON SPUCCH RELIABILITY FOR URLLC AI 6.2.8.3, 6 April 2018 (2018-04-06), Sanya, China, pages 1 - 9, XP051413447

## Description

### TECHNICAL FIELD

This application relates to the communication field, and in particular, to a communication method and a communication apparatus.

### BACKGROUND

To cope with explosive growth of mobile data traffic, massive mobile communication device connections, and various emerging new services and application scenarios in the future, a fifth generation (the fifth generation, 5G) mobile communication system emerges. The 5G mobile communication system needs to support an enhanced mobile broadband (enhanced mobile broadband, eMBB) service, an ultra-reliable low-latency communication (ultra reliable and low latency communications, URLLC) service, and a massive machine-type communications (massive machine type communications, mMTC) service.

Different services have different requirements on a mobile communication system. For example, typical eMBB services include an ultra high-definition video, augmented reality (augmented reality, AR), virtual reality (virtual reality, VR), and the like. These services are mainly characterized by a large data transmission amount and a quite high transmission rate. Typical URLLC services include tactile interaction applications such as wireless control in an industrial manufacturing or production process, motion control and remote repair of an unmanned vehicle and an unmanned aircraft, and remote surgery. These services are mainly characterized by ultra-high reliability, a low latency, a relatively small data transmission amount, and burstiness. In some emergencies, a URLLC service may preempt a transmission resource of an eMBB service.

To meet a transmission latency requirement of a URLLC service and reduce a feedback latency in a URLLC scenario, one slot may be divided into a plurality of subslots, and a same subslot may include a plurality of physical downlink shared channels (physical downlink shared channels, PDSCHs). Then, a physical uplink control channel (physical uplink control channel, PUCCH) resource is selected in each subslot to feed back a hybrid automatic repeat request (hybrid automatic repeat request acknowledgement, HARQ-ACK) message of downlink data carried by the PDSCHs, where the HARQ-ACK message includes an acknowledgement (acknowledgement, ACK) message or a negative acknowledgement (negative acknowledgement, NACK) message.

In an existing technology, a network device uniformly configures PUCCH resource sets (PUCCH resource sets) for subslots of a terminal device, and PUCCH resource sets for different subslots are the same. PUCCH resources that are actually available in different subslots and that are used for the foregoing feedback are different. Due to time division duplex (time division duplexing, TDD), a slot boundary limitation, and the like, there is no actually available PUCCH resource in some subslots. Consequently, a feedback latency of a URLLC service is affected, and data transmission reliability is reduced.

3GPP DRAFT R1-1906212 proposes that PUCCH resource set may be configured per sub-slot for UE. In order to accommodate sub-slot based HARQ-ACK feedback, the reference point for start symbol of PUCCH resource in the PUCCH resource set can be redefined as sub-slot boundary. Two PUCCH resources with different start symbol relative to slot boundary but same start symbol relative to sub-slot boundary can be configured as one PUCCH resource in the set.

### SUMMARY

The invention is set out in the appended set of claims. This application provides a communication method and a communication apparatus, to reduce a feedback latency of a URLLC service and improve data transmission reliability.

According to a first aspect, a communication method is provided. The method includes: receiving configuration information, where the configuration information is used to configure a first physical uplink control channel PUCCH resource set, and a PUCCH resource in the first PUCCH resource set is configured at a subslot-level subslot-level; determining a second PUCCH resource set of a subslot from the first PUCCH resource set, where the second PUCCH resource set includes an available PUCCH resource of the first PUCCH resource set in the subslot; and sending feedback information for downlink data on the available PUCCH resource in the second PUCCH resource set.

In the foregoing technical solution, a network device first configures a first PUCCH resource set of a specific slot for a terminal device, where the first PUCCH resource sets of various subslots are the same. Then, the terminal device selects a second PUCCH resource set of the subslot for each subslot. The second PUCCH resource set includes the available PUCCH resource of the first PUCCH resource set in the subslot, so that the subslot has the available PUCCH resource, to reduce a feedback latency of a URLLC service corresponding to the subslot, and improve data transmission reliability. In addition, a quantity of available PUCCH resources in some subslots is less than a quantity of PUCCH resources in the configured first PUCCH resource set. Therefore, the first PUCCH resource sets are first uniformly configured. Then, the second PUCCH resource set of each subslot is determined from the first PUCCH resource set, thereby reducing redundant signaling. For example, 2^{N} first PUCCH resource sets are uniformly configured, and N bits need to be used to indicate one of the PUCCH resources. However, because a quantity of available resources in each subslot is less than 2^{N}, many redundant patterns are generated when N bits are used for indication. An available resource set (namely, the second PUCCH resource set) of the subslot is determined for each subslot, and a quantity of bits less than N may be used to indicate each PUCCH resource in the second PUCCH resource set of the subslot. Therefore, redundancy overheads in downlink signaling are reduced.

That each PUCCH resource in the first PUCCH resource set is configured at a subslot-level may be understood as that the PUCCH resources are separately configured based on each subslot. For example, the first PUCCH resource set includes a PUCCH resource 1 to a PUCCH resource 6. In this case, the PUCCH resources 1 and 2 are configured for a subslot 1, the PUCCH resources 3 and 4 are configured for a subslot 2, and the PUCCH resources 5 and 6 are configured for a subslot 3. A subslot boundary is used as a reference for a start symbol of each PUCCH resource in the first PUCCH resource set. For example, the start symbol of each PUCCH resource is any one of the 1^{st} symbol of the subslot to a symbol whose sequence number is a length of the subslot (subslot length).

In some possible implementations, the configuration information may be sent by the network device to the terminal device through a higher layer message. The higher layer message may be a radio resource control (radio resource control, RRC) message or a media access control (media access control, MAC) layer message. The network device may send the higher layer message through a downlink channel. The downlink channel may be a physical downlink shared channel (physical downlink shared channel, PDSCH), or may be another type of downlink channel. How the network device sends the higher layer message is not limited in this application.

The network device uniformly configures the first PUCCH resource sets for the terminal device, where configuration of the first PUCCH resource set is based on the subslot-level. To be specific, the start symbol (starting symbol index) of each PUCCH resource in the first PUCCH resource set uses the subslot boundary as the reference, and a length is 1 symbol to symbols whose quantity is a length of a slot (length of slot). A parameter of each PUCCH resource includes at least one of the following: a start symbol (starting symbol) of a PUCCH resource, a PUCCH resource length, a frequency domain position, and index information of an orthogonal cover code (orthogonal cover code, OCC).

With reference to the first aspect, in some possible implementations of the first aspect, the available PUCCH resource meets any one of the following conditions: a symbol in which the available PUCCH resource is located is an uplink symbol or a flexible symbol; the available PUCCH resource does not exceed a boundary of a slot in which the subslot is located; duration of the available PUCCH resource is greater than or equal to a first threshold, where the first threshold corresponds to an aggregation level of a physical downlink shared channel PDCCH for scheduling the downlink data; a start symbol of the available PUCCH resource is later than a first time point, where the first time point is related to a time period required by the terminal device layer to process a PDSCH that carries the downlink data.

The terminal device determines an available PUCCH resource of each subslot in the slot from the first PUCCH resource set based on any one of the foregoing conditions or a combination of several conditions, to form the second PUCCH resource set of the subslot, where the second PUCCH resource set includes the available PUCCH resource in the subslot that is determined from the first PUCCH resource set.

It should be understood that the determined second PUCCH resource sets of the subslots may be the same or different. This is not limited in the embodiments of this application.

The determining a second PUCCH resource set of a subslot from the first PUCCH resource set includes: obtaining a first parameter, where the first parameter is a maximum quantity of available PUCCH resources in the second PUCCH resource set; and determining the second PUCCH resource set from the first PUCCH resource set based on the first parameter.

The terminal device determines the available PUCCH resource in the subslot from the first PUCCH resource set, and determines, based on the first parameter from the determined available PUCCH resources, the second PUCCH resource set of the subslot that includes a corresponding quantity of available PUCCH resources.

It should be understood that, based on different first parameters, the determined available PUCCH resource in the second PUCCH resource set of the subslot may include all available PUCCH resources in the subslot that are determined from the first PUCCH resource set, or may include a part of the available PUCCH resources in the subslot that are determined from the first PUCCH resource set. This is not limited in this embodiment of this application.

With reference to the first aspect, in some possible implementations of the first aspect, the first parameter is preconfigured in a protocol or configured by a network device.

According to a second aspect, a communication method is provided. The method includes: receiving configuration information, where the configuration information is used to configure a first physical uplink control channel PUCCH resource set, and the first PUCCH resource set is configured based on a first subslot type; and sending feedback information on a PUCCH resource in the first PUCCH resource set when it is determined that a subslot in which the feedback information for downlink data is located is the first subslot type.

The first PUCCH resource set may be configured at a subslot type level, that is, different subslot types may correspond to different PUCCH resource sets. A same subslot type may correspond to one PUCCH resource set.

In the technical solutions of this application, different PUCCH resource sets may be configured based on different subslot types, and attributes of different subslots can be fully considered, so that subslots with similar features, that is, subslots of a same subslot type correspond to a same PUCCH resource set. Therefore, a large quantity of unavailable resources in the PUCCH resource set can be avoided, and redundancy overheads in downlink signaling can be reduced.

The configuration information is used to configure a plurality of PUCCH resource sets including the first PUCCH resource set, the plurality of PUCCH resource sets correspond to a plurality of subslot types, and each PUCCH resource set corresponds to one subslot type. The sending feedback information on a PUCCH resource in the first PUCCH resource set when it is determined that a subslot in which the feedback information for downlink data is located is the first subslot type includes: determining that the subslot in which the feedback information is located is the first subslot type of the plurality of subslot types; and determining, from the plurality of PUCCH resource sets, the first PUCCH resource set corresponding to the first subslot type, and sending the feedback information on the PUCCH resource in the first PUCCH resource set.

In the technical solutions of this application, the configuration information may be used to configure the plurality of resource sets including the first PUCCH resource set, and the plurality of resource sets may have a correspondence with the plurality of subslot types. It is determined that the subslot in which the feedback information is located is the first subslot type, and the first PUCCH resource set corresponding to the first subslot type is selected from the plurality of PUCCH resource sets, so that attributes of different subslots can be fully considered, and subslots with similar features, that is, subslots of a same subslot type correspond to a same PUCCH resource set. Therefore, a large quantity of unavailable resources in the PUCCH resource set can be avoided, and redundancy overheads in downlink signaling can be reduced.

It should be noted that a correspondence between each of the plurality of PUCCH resource sets and one subslot type may mean that each PUCCH resource set is in a one-to-one correspondence with a subslot type. That is, different PUCCH resource sets correspond to different subslot types. Alternatively, the plurality of PUCCH resource sets may correspond to a same subslot type. This is not limited in the embodiments of this application.

With reference to the second aspect, in some possible implementations of the second aspect, the determining that the subslot in which the feedback information is located is the first subslot type of the plurality of subslot types includes: determining, based on a quantity of uplink symbols of the subslot in which the feedback information is located, that the subslot in which the feedback information is located is the first subslot type.

In the technical solutions of this application, a subslot type of the subslot may be determined based on the quantity of uplink symbols included in the subslot, and subslots that include a same quantity or a similar quantity of uplink symbols may correspond to a same subslot type, so that subslots with similar features, that is, subslots of a same subslot type correspond to a same PUCCH resource set, and therefore redundancy overheads in downlink signaling are reduced.

In a possible implementation, the quantity of uplink symbols of the subslot have a correspondence with the subslot type.

In a possible implementation, the uplink symbol includes a flexible symbol in the subslot, that is, the quantity of uplink symbols included in the subslot may be a total quantity of uplink symbols and flexible symbols included in the subslot.

In a possible implementation, the determining, based on a quantity of uplink symbols of the subslot in which the feedback information is located, that the subslot in which the feedback information is located is the first subslot type includes: determining, based on the quantity of uplink symbols of the subslot in which the feedback information is located and a threshold, that the subslot in which the feedback information is located is the first subslot type.

In a possible implementation, the threshold may be determined based on length information of the subslot.

In a possible implementation, the threshold may be configured by a network side device through higher layer signaling.

In a possible implementation, the threshold may be preconfigured in a protocol.

With reference to the second aspect, in some possible implementations of the second aspect, the determining that the subslot in which the feedback information is located is the first subslot type of the plurality of subslot types includes: determining, based on a position of the subslot in which the feedback information is located in a slot, that the subslot in which the feedback information is located is the first subslot type.

In the technical solutions of this application, a subslot type of the subslot may be determined based on the position of the subslot in the slot, and subslots whose positions are close to or adjacent to each other in the slot may correspond to a same subslot type, so that subslots with similar features, that is, subslots of a same subslot type correspond to a same PUCCH resource set, and therefore redundancy overheads in downlink signaling are reduced.

For example, it is assumed that one slot may include a subslot 0 to a subslot 5, and the subslot 0 and the subslot 1 that are located at the head of the slot may be the first subslot type. The subslot 3 located at the middle position of the slot may be a second subslot type. The subslot 4 and the subslot 5 that are located at the tail of the slot may be a third subslot type.

With reference to the second aspect, in some possible implementations of the second aspect, the determining that the subslot in which the feedback information is located is the first subslot type of the plurality of subslot types includes: determining, based on a quantity of uplink symbols of the subslot in which the feedback information is located and a position of the subslot in which the feedback information is located in a slot, that the subslot in which the feedback information is located is the first subslot type.

In the technical solutions of this application, a subslot type of the subslot may be determined based on the quantity of uplink symbols included in the subslot and the position of the subslot in the slot, so that subslots with similar features, that is, subslots of a same subslot type correspond to a same PUCCH resource set, and therefore redundancy overheads in downlink signaling are reduced.

With reference to the second aspect, in some possible implementations of the second aspect, the method further includes: receiving symbol distribution information, where the symbol distribution information is used to indicate positions of an uplink symbol, a downlink symbol, and a flexible symbol included in the slot.

In the technical solutions of this application, the symbol distribution information may be received, and a slot pattern, that is, the positions of the uplink symbol, the downlink symbol, and the flexible symbol included in the slot, is determined based on the symbol distribution information. A subslot pattern is further determined based on the slot pattern and the length information of the subslot, so that subslots with similar features, that is, subslots of a same subslot type correspond to a same PUCCH resource set, and therefore redundancy overheads in downlink signaling can be reduced.

According to a third aspect, a communication apparatus is provided, and includes a processor. The processor is coupled to a memory, and may be configured to execute instructions in the memory, to implement the communication method in the first aspect, or the second aspect.

Optionally, the communication apparatus further includes the memory.

Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in a terminal device. When the communication apparatus is the chip configured in the terminal device, the communication interface may be an input/output interface.

Optionally, the transceiver may be a transceiver circuit. Optionally, the input/output interface may be an input/output circuit.

### BRIEF DESCRIPTION OF DRAWINGS

FIG. 1 is a schematic diagram of a communication system applicable to this application;
FIG. 2 is a schematic flowchart of a communication method according to an embodiment of this application;
FIG. 3 is a schematic flowchart of another communication method according to an embodiment;
FIG. 4 is a schematic flowchart of another communication method according to an embodiment of this application;
FIG. 5 is a schematic diagram of a structure of a communication apparatus according to this application;
FIG. 6 is a schematic diagram of a structure of a terminal device according to this application; and
FIG. 7 is a schematic diagram of a structure of a network device according to this application.

### DESCRIPTION OF EMBODIMENTS

The following describes the technical solutions in this application with reference to the accompanying drawings.

The technical solutions in the embodiments of this application may be applied to various communication systems, for example, an evolved system of a new radio (new radio, NR) system (for example, an NR in unlicensed spectrum (NR-based access to unlicensed spectrum, NR-U) system), another communication system, or the like.

It should be noted that, in the embodiments of this application, a subslot may be a time scheduling unit used during data transmission. A slot may include one or more subslots, and the subslot may be a time unit shorter than the slot. The subslot may also be referred to as a sub-time unit or another name. This is not limited in this application.

For example, in an NR system, one slot may include 12 or 14 time domain symbols, and a quantity of symbols included in a subslot may be less than 12 or 14 time domain symbols, for example, 2 time domain symbols, 7 time domain symbols, or another quantity of time domain symbols. This is not limited in this application.

It should be understood that in the embodiments of this application, "first", "second", "third", and the like are merely intended to indicate different objects, but do not represent another limitation on the indicated objects.

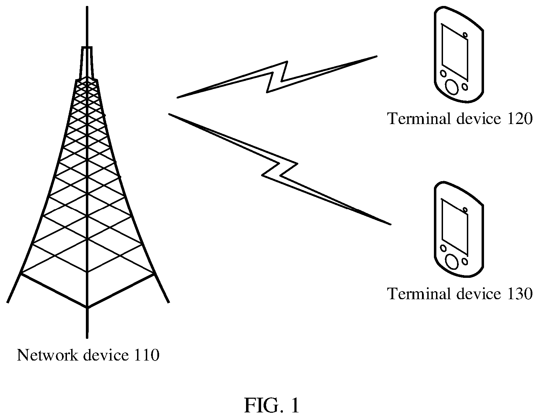

FIG. 1 is a schematic diagram of a communication system applicable to this application.

A communication system 100 includes a network device 110, a terminal device 120, and a terminal device 130. The terminal device 120 communicates with the network device 110 by using an electromagnetic wave, the terminal device 130 communicates with the network device 110 by using an electromagnetic wave, and the terminal device 120 may also communicate with the terminal device 130 by using an electromagnetic wave.

In this application, the terminal device 120 and the terminal device 130 may include various handheld devices, vehicle-mounted devices, wearable devices, or computing devices that have a wireless communication function, or other processing devices connected to a wireless modem, for example, user equipment (user equipment, UE) defined in the 3^{rd} generation partnership project (3^{rd} generation partnership project, 3GPP), a mobile station (mobile station, MS), a soft terminal, a home gateway, or a set-top box. A chip used in the foregoing device may also be referred to as a terminal device.

The network device 110 may be a base station defined in the 3GPP, for example, a base station (gNB) in a 5G communication system. The network device 110 may alternatively be a non-3GPP (non-3GPP) access network device, for example, an access gateway (access gateway, AGF). The network device may alternatively be a relay station, an access point, a vehicle-mounted device, a wearable device, or a device of another type.

The terminal device 120 and the terminal device 130 may transmit data of a same type, or may transmit data of different types. When the terminal device 120 and the terminal device 130 transmit the data of the different types, in an optional example, the terminal device 120 transmits a data packet of an eMBB service (referred to as "eMBB data" for short), and the terminal device 130 transmits a data packet of a URLLC service (referred to as "URLLC data" for short).

The URLLC service has an extremely high requirement for a latency, requires a transmission latency to be not longer than 0.5 milliseconds (millisecond, ms) when reliability is not considered, and requires the transmission latency to be not longer than 1 ms when 99.999% reliability is reached.

In a long term evolution (long term evolution, LTE) system, a minimum time scheduling unit is a transmission time interval (transmission time interval, TTI) with a time length of 1 ms, for example, a subframe. In an NR system, to meet a feedback latency requirement of the URLLC service, a shorter time scheduling unit may be used for data transmission at a radio air interface. For example, a subslot (subslot) or a slot (slot) with a larger subcarrier spacing than that of the LTE system is used as the minimum time scheduling unit. One subslot includes one or more time domain symbols, and the time domain symbol herein may be an orthogonal frequency division multiplexing (orthogonal frequency division multiplexing, OFDM) symbol (symbol). One slot includes 14 time domain symbols (normal cyclic prefixes) or 12 time domain symbols (extended cyclic prefixes). For a slot whose subcarrier spacing is 15 kilohertz (kilohertz, kHz), a time length corresponding to the slot is 1 ms. For a slot whose subcarrier spacing is 60 kHz, a time length corresponding to the slot is shortened to 0.25 ms.

To reduce a feedback latency in a URLLC scenario, a plurality of pieces of feedback information for downlink data may be sent in one slot, for example, a HARQ-ACK message. That is, one slot is divided into a plurality of subslots, and the subslots are used to indicate that an indication granularity of a parameter K1 of a slot in which the HARQ-ACK feedback is located changes from a slot-level to a subslot-level. All PDSCHs that point to a same subslot (that is, HARQ-ACK messages of the PDSCHs are fed back on the same subslot) form a group, and then a PUCCH resource is selected from each subslot to feed back the HARQ-ACK messages of these PDSCHs, so that a plurality of HARQ-ACK messages are fed back in one slot.

In an existing technology, a network device configures a subslot pattern in a slot for a terminal device through higher layer signaling, where subslot patterns in different slots are the same, and the subslot pattern is a quantity of subslots in the slot and specific positions of subslots (including a start OFDM symbol and a quantity of consecutive OFDM symbols). The network device uniformly configures PUCCH resource sets for the terminal device, and PUCCH resource sets of all subslots are the same.

However, in TDD, positions of available symbols in different subslots are different, and the available symbol includes an uplink symbol and a flexible (flexible) symbol, so that quantities of actually available PUCCH resources in the subslots are different. When the PUCCH resource set uniformly configured by the network device is too small, a quantity of actually available PUCCH resources in some subslots may be small or even zero. Consequently, a feedback latency of the URLLC service is affected. When the PUCCH resource set uniformly configured by the network device is too large, for a subslot in which symbols are all available, a 3-bit (bit) or even more bits of PUCCH resource indicator (PUCCH resource indicator) is required in combination with more bits of downlink control information (downlink control information, DCI) or another implicit method, so that all PUCCH resources in the PUCCH resource set can be indicated, and a quantity of bits of indication information is increased, that is, a size of information of a control channel is increased. When a same physical resource is occupied, more information of the control channel indicates lower receive reliability. The information of the control channel is used to schedule data for transmission, and control information is incorrectly received, affecting data transmission. Consequently, when the information of the control channel increases, reliability of data transmission of the URLLC service is further affected.

In view of this, an embodiment of this application provides a communication method 200. The communication method 200 may be applied to the communication system shown in FIG. 1. For example, the method may be performed by the terminal device 120 or the terminal device 130, or may be performed by a chip in the terminal device 120 or a chip in the terminal device 130. For brevity, the following "terminal device" and "network device" are not attached with reference signs.

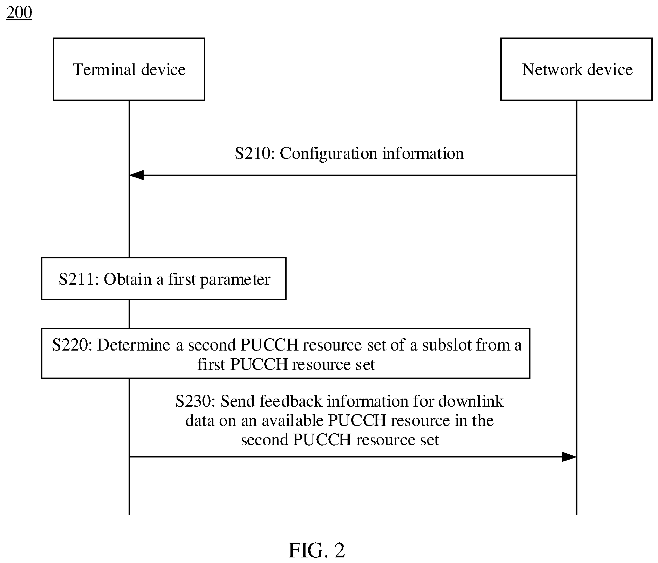

As shown in FIG. 2, the method 200 includes the following steps.

S210: A terminal device receives configuration information.

The configuration information is used to configure a first physical uplink control channel PUCCH resource set, and each PUCCH resource in the first PUCCH resource set is configured at a subslot-level (subslot-level).

It should be noted that configuring each PUCCH resource in the first PUCCH resource set at a subslot-level may be understood as that a subslot boundary is used as a reference for a start symbol of each PUCCH resource in the first PUCCH resource set. That is, the start symbol of each PUCCH resource is any one of the 1^{st} symbol of a subslot to a symbol whose sequence number is a length of the subslot (subslot length).

In some possible implementations, the configuration information may be sent by a network device to the terminal device through a higher layer message. The higher layer message may be a radio resource control (radio resource control, RRC) message or a media access control (media access control, MAC) layer message. The network device may send the higher layer message through a downlink channel. The downlink channel may be a physical downlink shared channel (physical downlink shared channel, PDSCH), or may be another type of downlink channel. How the network device sends the higher layer message is not limited in this application.

The network device uniformly configures the first PUCCH resource sets for the terminal device, where configuration of the first PUCCH resource set is based on the subslot-level. To be specific, the subslot boundary is used as the reference for the start symbol (starting symbol index) of each PUCCH resource in the first PUCCH resource set, and a length is 1 symbol to symbols whose quantity is a length of a slot (length of slot). A parameter of each PUCCH resource includes at least one of the following: a start symbol (starting symbol) of a PUCCH resource, a PUCCH resource length, a frequency domain position, and index information of an orthogonal cover code (orthogonal cover code, OCC).

S220: The terminal device determines a second PUCCH resource set of the subslot from the first PUCCH resource set.

Because the first PUCCH resource sets are uniformly configured by the network device for subslots in all slots, the first PUCCH resource sets of all the subslots are the same, that is, start positions and duration of the first PUCCHs in all the subslots are the same. The PUCCH resource is an available resource only when all symbols included in the PUCCH resource are available symbols. However, in TDD, positions of available symbols (including uplink symbols and flexible symbols) in different subslots are different. In this case, quantities of available PUCCH resources in the subslots are different, and a quantity of available PUCCH resources in some subslots is small or even zero. Consequently, a feedback latency of a URLLC service is affected, and data transmission reliability is reduced.

To ensure that there is an available PUCCH resource in each subslot, the terminal device may select the second PUCCH resource set from the first PUCCH resource set for each subslot. The second PUCCH resource set includes the available PUCCH resource of the first PUCCH resource set in the subslot.

The terminal device selects the available PUCCH resource in the subslot from the PUCCH resources in the first PUCCH resource set. The available PUCCH resource in the subslot meets any one of the following conditions.
(a) A symbol in which the PUCCH resource is located is a non-downlink symbol.
   The non-downlink symbol includes an uplink symbol and a flexible symbol. The uplink symbol or the flexible symbol may be an uplink symbol or a flexible symbol configured by the network device through the higher layer message, or an uplink symbol or a flexible symbol indicated by a slot format indicator (slot format indication, SFI). This is not limited in this embodiment of this application.
(b) The PUCCH resource does not exceed a boundary of a slot in which the subslot is located.
   According to 3GPP specifications, a PUCCH resource can cross a subslot boundary but cannot cross a boundary of a slot. When the PUCCH resource exceeds the boundary of the slot in which the subslot is located, the PUCCH resource is unavailable.
(c) Duration of the PUCCH resource is greater than or equal to a first threshold, where the first threshold is in a one-to-one correspondence with an aggregation level of a PDCCH for scheduling downlink data.

The uplink control channel PUCCH carries control information such as uplink scheduling request sending information, ACK/NACK feedback information of a downlink PDSCH channel, and CQI feedback of a downlink radio channel. The information plays a crucial role in configuring a time-frequency resource by a base station, a modulation and coding scheme, and the like. The PUCCH resource set is used to feed back a feedback information resource corresponding to the PDSCH. The aggregation level (aggregation level, AL) is a unit used to send a control resource occupied by a PDCCH carrying DCI. In an NR system, the AL may be 1, 2, 4, 8, or 16. A larger value of the AL indicates that more control resources are occupied by the PDCCH, and reliability is higher. Generally, when a channel condition is poor, the network device sends a PDCCH with a larger AL value to the terminal device. In this case, the terminal device also needs to send feedback information for the downlink data to the network device by using a PUCCH resource with longer duration (duration), to ensure a receiving accuracy of the network device.

In some possible implementations, the terminal device may determine the first threshold based on Table 1 preconfigured in a protocol, and select a PUCCH resource whose duration is greater than or equal to the first threshold as the available PUCCH resource.

**Table 1**

| Aggregation level | Threshold |
|---|---|
| 1 | 1 |
| 2 | 2 |
| 4 | 3 |
| 8 | 5 |
| 16 | 7 |

Table 1 shows a correspondence between an aggregation level and a threshold. When the aggregation level is higher, the threshold increases accordingly. For example, when the aggregation level is 4, the threshold is 3. When the aggregation level is 16, the threshold is 7. After determining the threshold, the terminal device may select a PUCCH resource whose duration of the PUCCH resource is greater than or equal to the threshold as an available resource.

It should be understood that the specific value in Table 1 is merely an example for description. This is not specifically limited in this embodiment of this application.

(d) A start symbol of the PUCCH resource is later than a first time point, where the first time point is related to a time period required by the terminal device to process a physical downlink shared channel PDSCH that carries downlink data.

Because the PUCCH resource is a resource used to feed back a HARQ-ACK message corresponding to the PDSCH, the terminal device regenerates the HARQ-ACK message after receiving the PDSCH (including channel estimation of a pilot symbol and demodulation and decoding of a data block carried on the PDSCH). The current R15 protocol provides a time requirement T for the terminal device to process the PDSCH. In other words, if the HARQ-ACK message is fed back after T time after the last OFDM symbol of the PDSCH, all or a part of PUCCH resources located before the time point are unavailable.

After determining available PUCCH resources, the terminal device sorts the available PUCCH resources in ascending order based on identifiers (identify, ID) of the PUCCH resources to form a second PUCCH resource set, until a maximum quantity of PUCCH resources allowed by the second PUCCH resource set is reached or a maximum resource identifier ID in a first PUCCH resource set is reached.

Optionally, the protocol may specify that a maximum quantity of PUCCH resources in the first PUCCH resource set is M, and a maximum quantity of PUCCH resources in the second PUCCH resource set is N, where both M and N are positive integers, and M is greater than or equal to N.

When the network device configures the first PUCCH resource set, a quantity of PUCCH resources in the first PUCCH resource set may not be specifically limited, and the terminal device determines the second PUCCH resource set from the first resource PUCCH resource set. A quantity of PUCCH resources in the second PUCCH resource set is less than or equal to the quantity of PUCCH resources in the first PUCCH resource set. This is not limited in this embodiment of this application.

Before step S220, the method 200 further includes step S211 in which the terminal device obtains a first parameter.

The first parameter is the maximum quantity of PUCCH resources in the second PUCCH resource set. When determining the second PUCCH resource set, the terminal device may first determine the maximum quantity of PUCCH resources in the second PUCCH resource set. For example, the first parameter is preset in a protocol, configured by the network device, or determined based on Table 2.

**Table 2**

| Duration of a subslot (unit: symbol) | Quantity of PUCCH resources |
|---|---|
| 2 | 2 |
| 4 | 4 |
| 7 | 8 |
| ... | ... |

Table 2 shows a correspondence between duration of a subslot and a quantity of PUCCH resources. As shown in Table 2, when the duration of the subslot is longer, the quantity of PUCCH resources in the subslot is greater. For example, when the duration of the subslot is 4 symbols, the quantity of PUCCH resources is four. When the duration of the subslot is 7 symbols, the quantity of PUCCH resources is 8.

It should be understood that the value in Table 2 is merely an example for description. The correspondence is not limited in this application.

After determining the quantity of PUCCH resources in the second PUCCH resource set, the terminal device determines a second PUCCH resource set of a corresponding subslot from the first PUCCH resource set, where the second PUCCH resource sets of the subslots may be different.

It should be noted that the terminal device determines an available PUCCH resource in the subslot from the first PUCCH resource set, and determines the second PUCCH resource set based on the first parameter. It is assumed that the first PUCCH resource set includes P PUCCH resources, the terminal device determines that there are Q available PUCCH resources in the subslot, where both P and Q are positive integers, and P is greater than or equal to Q. That the second PUCCH resource set includes an available PUCCH resource of the first PUCCH resource set in the subslot may have the following cases:

### Case 1

A value K (where K is a positive integer) of the first parameter is less than the determined quantity Q of available PUCCH resources. In this case, the terminal device sorts, based on resource identifiers in ascending order, the available PUCCH resources in the subslot that are determined from the first PUCCH resource, and sequentially selects K PUCCH resources, to form the second PUCCH resource set. In this case, a quantity of available PUCCH resources in the second PUCCH resource set is less than that of available PUCCH resources in the subslot that are determined by the terminal device from the first PUCCH resource set. The terminal device sends feedback information for downlink data on the K available PUCCH resource sets in the second PUCCH resource set.

### Case 2

A value K of the first parameter is greater than or equal to the determined quantity Q of available PUCCH resources. For example, if K is equal to Q, the terminal device sorts, based on resource identifiers in ascending order, the available PUCCH resources in the subslot that are determined from the first PUCCH resource, and the Q available PUCCH resources form the second PUCCH resource set. In this case, a quantity of available PUCCH resources in the second PUCCH resource set is less than that of available PUCCH resources in the subslot that are determined by the terminal device from the first PUCCH resource set. Alternatively, K is greater than Q. Because the quantity of available PUCCH resources in the subslot that are determined by the terminal device from the first PUCCH resource set is Q, and is less than the value K of the first parameter, in this case, the second PUCCH resource set are still formed by the Q available PUCCH resources. The terminal device sends feedback information for downlink data on the Q available PUCCH resource sets in the second PUCCH resource set.

It should be understood that the parameter value in the foregoing cases is merely for ease of description, and a specific value of the first parameter value is not limited in this embodiment of this application.

S230: The terminal device sends the feedback information for the downlink data on the available PUCCH resource in the second PUCCH resource set.

After determining the second PUCCH resource sets of all subslots, the terminal device sends the feedback information for the downlink data on the available PUCCH resource in the second PUCCH resource set, where the feedback information for the downlink data may be a HARQ-ACK message.

The terminal device determines, from the second PUCCH resource set based on an index value indicated by an inherent N-bit PUCCH resource indicator (PUCCH resource indicator) field in DCI, the PUCCH resource on which the feedback information for the downlink data is sent.

If the quantity of PUCCH resources in the second PUCCH set resource does not exceed 2^{N}, the terminal device directly determines the PUCCH resource from the second PUCCH resource set based on the index value indicated by the PUCCH resource indicator field.

Alternatively, if the quantity of PUCCH resources in the second PUCCH resource set exceeds 2^{N}, the terminal device determines the PUCCH resource from the second PUCCH resource set based on the index value indicated by the PUCCH resource indicator field and a position of the DCI in an entire control resource set (control resource set, CORESET).

The terminal device sends, on the determined PUCCH resource, UCI including the HARQ-ACK message, and correspondingly, the network device receives, on the determined PUCCH resource, the UCI including the HARQ-ACK message.

In the foregoing technical solution, the network device first configures the first PUCCH resource set for a subslot. Then, the terminal device selects a second PUCCH resource set of the subslot for each subslot. The second PUCCH resource set includes the available PUCCH resource of the first PUCCH resource set in the subslot, so that each subslot has the available PUCCH resource, to reduce a feedback latency of a URLLC service, improve data transmission reliability, and reduce signaling overheads.

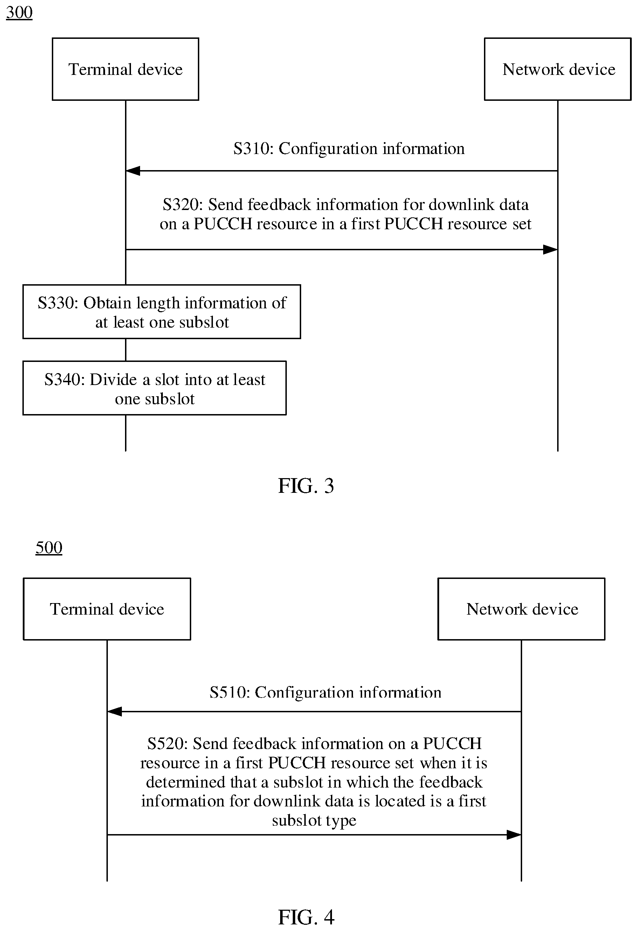

FIG. 3 is a schematic flowchart of another communication method 300 according to an embodiment. The communication method 300 may be applied to the communication system shown in FIG. 1. For example, the method 300 may be performed by the terminal device 120 or the terminal device 130, or may be performed by a chip in the terminal device 120 or a chip in the terminal device 130.

As shown in FIG. 3, the method 300 includes the following steps.

S310: A terminal device receives configuration information.

The configuration information is used to configure a first physical uplink control channel PUCCH resource set.

It should be noted that each PUCCH resource in the first PUCCH resource set configured in step S310 may be configured at a subslot-level (subslot-level), or may be configured at a slot-level (slot-level). This is not limited in this embodiment of this application.

It should be noted that configuring each PUCCH resource in the first PUCCH resource set at a subslot-level may be understood as that a subslot boundary is used as a reference for a start symbol of each PUCCH resource in the first PUCCH resource set. That is, the start symbol of each PUCCH resource is any one of the 1^{st} symbol of a subslot to a symbol whose sequence number is a length of the subslot (subslot length). That each PUCCH resource in the first PUCCH resource set is configured at a slot-level may be understood as that a boundary of a slot is used as a reference for a start symbol of each PUCCH resource in the first PUCCH resource set. That is, the start symbol of each PUCCH resource is any one of the 1^{st} symbol of a slot to a symbol whose sequence number is a length of the slot (slot length).

In some possible implementations, the configuration information may be sent by a network device to the terminal device through a higher layer message. The higher layer message may be a radio resource control (radio resource control, RRC) message or a media access control (media access control, MAC) layer message. The network device may send the higher layer message through a downlink channel. The downlink channel may be a physical downlink shared channel (physical downlink shared channel, PDSCH), or may be another type of downlink channel. How the network device sends the higher layer message is not limited in this application.

Step S310 is similar to step S210. For specific description, refer to that of step S210. For brevity, details are not described herein again.

S320: The terminal device sends feedback information for downlink data on the PUCCH resource in the first PUCCH resource set.

The start symbol of the PUCCH resource is in at least one subslot of the slot, and each subslot of the slot includes at least one uplink symbol or flexible symbol. There is a difference of M symbols between a position of the 1^{st} uplink symbol or flexible symbol of the at least one uplink symbol or flexible symbol in the subslot and a position of a start symbol of the subslot, M is the non-negative integer, and M is less than or equal to the length of the subslot.

In an existing technology, a position of an available symbol (an uplink symbol or a flexible symbol) in each subslot is flexible and changeable. An available symbol in some subslots is located at the head of the subslot, an available symbol in some subslots is located in the middle of the subslot, and an available symbol in some subslots is located at the tail of the subslot. The network device uniformly configures PUCCH resource sets for all subslots, and it is difficult to consider all of the subslots to enable all of the subslots to have as many available PUCCH resources as possible.

In some possible implementations, the method 300 further includes step S330 in which the terminal device obtains length information of the at least one subslot.

After obtaining the length information of the at least one subslot, the terminal device divides the slot into subslots of a corresponding length based on the length information. For example, if a length of the slot is 14 symbols, and the length information of the at least one subslot is 4 symbols, the slot may be divided into a subslot 1 whose length is 4 symbols, a subslot 2 whose length is 4 symbols, a subslot 3 whose length is 4 symbols, and a subslot 4 whose length is 2 symbols.

In some possible implementations, the length information of the at least one subslot is preconfigured in a protocol or configured by the network device. This is not limited in this embodiment of this application.

S340: The terminal device determines the at least one subslot included in the slot.

After obtaining the length information of the at least one subslot, the terminal device determines a position of the subslot in the slot based on the length information of the subslot and a configured uplink/downlink symbol.

For example, the terminal device performs searching from the 1^{st} symbol of the slot until the 1^{st} available symbol is found, and uses N consecutive symbols starting from the symbol as the subslot, where N is a positive integer less than or equal to the length of the at least one subslot. After determining the 1^{st} subslot of the slot, the terminal device continues searching, uses N consecutive symbols starting from a next available symbol as the 2^{nd} subslot, and so on until the last symbol of the slot. After division, a start symbol of each subslot in the slot is the 1^{st} uplink symbol or flexible symbol. In other words, there is a difference of 0 symbols between the position of the 1^{st} uplink symbol or flexible symbol of each subslot in the subslot and the position of the start symbol of the subslot.

Alternatively, the terminal device performs searching from the 1^{st} symbol of the slot until the 1^{st} available symbol is found, and uses N consecutive symbols starting from a symbol preceding the 1^{st} available symbol as the subslot, where N is a positive integer less than or equal to the length of the at least one subslot. After determining the 1^{st} subslot of the slot, the terminal device continues searching, uses N consecutive symbols starting from a symbol preceding a next available symbol as the 2^{nd} subslot, and so on until the last symbol of the slot. After division, the 2^{nd} symbol of each subslot in the slot is the 1^{st} uplink symbol or flexible symbol. In other words, there is a difference of 1 symbol between the position of the 1^{st} uplink symbol or flexible symbol of each subslot in the subslot and the position of the start symbol of the subslot.

It should be understood that because of the uplink/downlink symbol configuration in the slot, the N symbols determined in each subslot may include an available symbol or an unavailable symbol. Based on different values of M, positions of the 1^{st} uplink symbols or flexible symbols of subslots obtained through division may be different in the subslots. For example, the 1^{st} uplink symbol or flexible symbol is the start symbol of the subslot, or is the 2^{nd} symbol or the 3^{rd} symbol of the subslot, but the positions of the 1^{st} uplink symbols or flexible symbols of the subslots in the slot are the same in the subslots. A specific division manner is not specifically limited in this application.

In step S330 and step S340, the terminal device determines the at least one subslot included in the subslot, where all subslots in the slot include at least one uplink symbol or flexible symbol. The position of the 1^{st} uplink symbol or flexible symbol of each subslot has a difference of M symbols from the position of the start symbol of the subslot, that is, the positions of the 1^{st} uplink symbol or flexible symbol of all the subslots are the same in the subslots. When configuring the first PUCCH resource set, the network device may comply with this feature, thereby reducing complexity of uniformly configuring the first PUCCH resource set by the network device.

After the network device configures the first PUCCH resource set, the terminal device determines, from the first PUCCH resource set based on an index value indicated by an inherent N-bit PUCCH resource indicator (PUCCH resource indicator) field in DCI, a PUCCH resource on which feedback information for uplink data is sent.

If a quantity of available PUCCH resources in the subslot does not exceed 2^{N}, the terminal device directly determines, from the first PUCCH resource set based on the index value indicated by the PUCCH resource indicator field, the PUCCH resource used to send the uplink feedback information.

Alternatively, if a quantity of available PUCCH resources in the subslot exceeds 2^{N}, the terminal device determines, from the first PUCCH resource set based on the index value indicated by the PUCCH resource indicator field and a position of the DCI in an entire CORESET, the PUCCH resource used to send the uplink feedback information.

The terminal device sends, on the determined PUCCH resource, UCI including a HARQ-ACK message, and correspondingly, the network device receives, on the determined PUCCH resource, the UCI including the HARQ-ACK message.

It should be noted that the step numbers in the foregoing method embodiment are merely an example for description, and a sequence of the numbers does not indicate a sequence of performing the steps. This is not limited in this embodiment of this application.

In the foregoing technical solution, the terminal device divides the slot into the at least one subslot, and the subslot includes the at least one uplink symbol or flexible symbol. There is the difference of M symbols between the position of the 1^{st} uplink symbol or flexible symbol of the at least one uplink symbol or flexible symbol in the subslot and the position of the start symbol of the subslot, M is a non-negative integer, and M is less than or equal to the length of the subslot. The positions of the 1^{st} uplink symbols or flexible symbols in the subslots obtained after the slot is divided are the same. When preconfiguring the first PUCCH resource set, the network device fully considers this, so that a large quantity of unavailable PUCCH resources in the configured first PUCCH resource set are avoided, and both a feedback latency of a URLLC service and complexity of configuring the first PUCCH resource set by the network device are reduced.

FIG. 4 is a schematic flowchart of another communication method 500 according to an embodiment of this application. The communication method 500 may be applied to the communication system shown in FIG. 1. For example, the method 500 may be performed by the terminal device 120 or the terminal device 130, or may be performed by a chip in the terminal device 120 or a chip in the terminal device 130. Step 510 and step 520 shown in FIG. 4 are described in detail below.

Step 510: A terminal device receives configuration information.

The configuration information may be used to configure a first physical uplink control channel PUCCH resource set, and the first PUCCH resource set is configured based on a first subslot type.

It should be noted that a quantity of uplink symbols included in a subslot may have a correspondence with a subslot type, that is, subslots may be classified into different subslot types based on different quantities of uplink symbols included in the subslots. For example, a subslot including a quantity of uplink symbols of 2 in the subslot may be classified into the first subslot type. A subslot including a quantity of uplink symbols of 4 in the subslot may be classified into a second subslot type.

Alternatively, there may be a correspondence between a position of a subslot in a slot and a subslot type, that is, subslots may be classified into different subslot types based on different positions of the subslots in the slots. For example, a subslot located at the head of the slot may be classified into the first subslot type. A subslot located in the middle of the slot may be classified into a second subslot type. A subslot located at the tail of the slot may be classified into a third subslot type.

Alternatively, a quantity of uplink symbols included in a subslot and a position of a subslot in a slot may have a correspondence with a subslot type. That is, subslots may be classified into different subslot types based on different quantities of uplink symbols included in the subslots and different positions of the subslots in the slots. For example, subslots that include a same quantity of uplink symbols and are located at the head of the slot may be classified into the first subslot type. Subslots that include a same quantity of uplink symbols and are located in the middle of the slot are classified into a second subslot type. Subslots that include a same quantity of uplink symbols and are located at the tail of the slot are classified into a third subslot type.

It should be understood that the first PUCCH resource set configured in step 510 may be configured at a subslot type level. In other words, different subslot types may correspond to different PUCCH resource sets, and a same subslot type may correspond to one PUCCH resource set.

For example, each PUCCH resource in the first PUCCH resource set may be configured at a subslot-level, or may be configured at a slot-level. This is not limited in this embodiment of this application.

It should be noted that configuring each PUCCH resource in the first PUCCH resource set at a subslot-level may be understood as that a subslot boundary is used as a reference for a start symbol of each PUCCH resource in the first PUCCH resource set. That is, the start symbol of each PUCCH resource is any one of the 1^{st} symbol of the subslot to a symbol whose sequence number is a length of the subslot (subslot length). Alternatively, that each PUCCH resource in the first PUCCH resource set is configured at a slot-level may be understood as that a boundary of the slot is used as a reference for a start symbol of each PUCCH resource in the first PUCCH resource set. That is, the start symbol of each PUCCH resource is any one of the 1^{st} symbol of the slot to a symbol whose sequence number is a length of the slot (slot length).

In some possible implementations, the configuration information may be sent by a network device to the terminal device through a higher layer message. The higher layer message may be a radio resource control (radio resource control, RRC) message or a media access control (media access control, MAC) layer message. The network device may send the higher layer message through a downlink channel. The downlink channel may be a physical downlink shared channel (physical downlink shared channel, PDSCH), or may be another type of downlink channel. How the network device sends the higher layer message is not limited in this application.

Step 520: The terminal device sends feedback information on a PUCCH resource in the first PUCCH resource set when determining that a subslot in which the feedback information for downlink data is located is the first subslot type.

In this embodiment of this application, the terminal device may first determine a subslot type of the subslot in which the feedback information for the downlink data is located, determine, based on the subslot type, a PUCCH resource set corresponding to the subslot type, and send the feedback information on a PUCCH resource in the PUCCH resource.

The configuration information may be used to configure a plurality of PUCCH resource sets including the first PUCCH resource set, and each PUCCH resource set of the plurality of resource sets may correspond to one subslot type. When it is determined that the subslot in which the feedback information for the downlink data is located is the first subslot type, the sending feedback information on a PUCCH resource in the first PUCCH resource set may be determining, from the plurality of PUCCH resource sets, the first PUCCH resource set corresponding to the first subslot type, and sending the feedback information on the PUCCH resource in the first PUCCH resource set.

It should be noted that a correspondence between each of the plurality of PUCCH resource sets and one subslot type may mean that each PUCCH resource set is in a one-to-one correspondence with a subslot type. That is, different PUCCH resource sets correspond to different subslot types. Alternatively, at least two PUCCH resource sets in the plurality of PUCCH resource sets may correspond to one same subslot type. This is not limited in this embodiment of this application.

For example, when a plurality of PUCCH resource sets correspond to a same subslot type, the subslot type of the subslot in which the feedback information for the downlink data is located may be first determined. M PUCCH resource sets corresponding to the subslot type in the plurality of PUCCH resource sets are determined based on the subslot type, and then a PUCCH resource set is selected from the M PUCCH resource sets, where M is an integer greater than 1.

For example, assuming that both the first PUCCH resource set and a second PUCCH resource set correspond to the first subslot type, a resource set for sending the feedback information for the downlink data may be further selected from the first PUCCH resource set and the second PUCCH resource set based on a criterion. The criterion may be a quantity of bits occupied by the feedback information, or the criterion may be a communication quality requirement or another preset condition. This is not limited in this application.

In this embodiment of this application, because each PUCCH resource set of the plurality of resource sets may correspond to one subslot type, the subslot type of the subslot in which the feedback information for the downlink data is located may be first determined, and then the PUCCH resource set corresponding to the subslot type is selected from the plurality of PUCCH resource sets based on the subslot type. In other words, the determining, from the plurality of PUCCH resource sets, the first PUCCH resource set corresponding to the first subslot type may be determining that the subslot in which the feedback information for the downlink data is located is the first subslot type, thereby determining, from the plurality of PUCCH resource sets, the first PUCCH resource set corresponding to the first subslot type.

The following describes how to determine the subslot type of the subslot in which the feedback information for the downlink data is located. A method for determining the subslot type includes but is not limited to the following three manners.

Manner 1: The subslot type may be determined based on the quantity of uplink symbols included in the subslot.

The foregoing subslot is the subslot in which the feedback information for the downlink data is located.

### Case 1

Optionally, the determining, from the plurality of PUCCH resource sets, the first PUCCH resource set corresponding to the first subslot type includes: determining, based on the quantity of uplink symbols of the subslot in which the feedback information is located, that the subslot in which the feedback information is located is the first subslot type.

It should be noted that, in this embodiment of this application, the quantity of uplink symbols included in the subslot may have a correspondence with the subslot type.

For example, if a length of the subslot may be 2 symbols, subslots in the slot may be classified into three subslot types. For example, a subslot that includes 0 uplink symbols in the subslot may be the first subslot type. A subslot that includes 1 uplink symbol in the subslot may be the second subslot type. A subslot that includes 2 uplink symbols in the subslot may be the third subslot type.

For example, if a length of the subslot may be 4 symbols, subslots in the slot may be classified into five subslot types. For example, a subslot that includes 0 uplink symbols in the subslot may be the first subslot type. A subslot that includes one uplink symbol in the subslot may be the second subslot type. A subslot that includes 2 uplink symbols in the subslot may be the third subslot type. A subslot that includes 3 uplink symbols in the subslot may be a fourth subslot type. A subslot that includes 4 uplink symbols in the subslot may be a fifth subslot type.

Similarly, if a length of a subslot is 7 symbols, subslots in the slot may be classified into eight subslot types.

### Case 2

Optionally, the determining, from the plurality of PUCCH resource sets, the first PUCCH resource set corresponding to the first subslot type includes: determining, based on the quantity of uplink symbols of the subslot in which the feedback information is located and a threshold, that the subslot in which the feedback information is located is the first subslot type.

The threshold may be one threshold, or may be a plurality of thresholds.

In a possible implementation, the threshold may be determined based on length information of the subslot. For example, the threshold may be an integer greater than or equal to 0 and less than a length of the subslot.

In another possible implementation, the threshold may be configured in a protocol.

In another possible implementation, the threshold may be configured by a network side device through higher layer signaling.

For example, if the length of the subslot is 7 symbols, there may be eight possibilities for quantities of uplink symbols included in the subslot, that is, the quantities of uplink symbols are respectively 0 to 7. The threshold may be a quantity of at least uplink symbols included in each subslot. For example, the threshold may be 4, and a subslot that includes a quantity of uplink symbols of 0 to 3 may be the first subslot type. A subslot that includes a quantity of uplink symbols of 4 to 7 may be the second subslot type.

For example, if the length of the subslot is 7 symbols, there may be eight possibilities for quantities of uplink symbols included in the subslot, that is, the quantities of uplink symbols are respectively 0 to 7. The threshold may be a quantity of at least uplink symbols included in each subslot. For example, the threshold may be 2, 4, or 6, and a subslot that includes 0 uplink symbols or 1 uplink symbol may be the first subslot type. A subslot that includes 2 or 3 uplink symbols may be the second subslot type. A subslot that includes 4 or 5 uplink symbols may be the third subslot type. A subslot that includes 6 or 7 uplink symbols may be the third subslot type.

It should be noted that the quantity of uplink symbols and the threshold are used as examples for description. This is not limited in this application.

In a possible implementation, the quantity of uplink symbols may be a quantity of uplink time domain symbols included in the subslot.

In another possible implementation, the quantity of uplink symbols may be a quantity of uplink time domain symbols and flexible symbols that are included in the subslot.

Manner 2: The subslot type may be determined based on a position of the subslot in the slot.

Optionally, the determining, from the plurality of PUCCH resource sets, the first PUCCH resource set corresponding to the first subslot type includes: determining, based on the position of the subslot in which the feedback information is located, that the subslot in which the feedback information is located is the first subslot type.

For example, it is assumed that there are P subslots in one slot, subslots 0 to Q-1 may belong to the first subslot type, and subslots Q to P-1 may belong to the second subslot type, where the threshold Q may be configured by the network device or configured in a protocol.

For example, it is assumed that one slot may include a subslot 0 to a subslot 5, and the subslot 0 and the subslot 1 that are located at the head of the slot may be the first subslot type. The subslot 3 located at the middle position of the slot may be the second subslot type. The subslot 4 and the subslot 5 that are located at the tail of the slot may be the third subslot type.

Manner 3: The subslot type may be determined based on a quantity of uplink symbols included in the subslot and a position of the subslot in the slot.

For example, the slot may include 4 subslots, which are respectively a subslot 0 to a subslot 3. Each of the subslot 0 to the subslot 2 includes 4 uplink symbols, and the subslot 3 includes 2 uplink symbols. Based on the quantity of uplink symbols included in the subslot, the subslot 0 to the subslot 2 may correspond to a same subslot type. Further, subslot types of the subslot 0 to the subslot 2 may be classified based on positions of the subslots in the slot. For example, the subslot 0 located at the head of the slot may be the first subslot type. The subslot 1 and the subslot 2 that are located in the middle of the slot may be the second subslot type. The subslot 3 located at the tail of the slot may be the third subslot type.

In a possible implementation, the quantity of uplink symbols may be a quantity of uplink time domain symbols included in the subslot.

In another possible implementation, the quantity of uplink symbols may be a quantity of uplink time domain symbols and flexible symbols that are included in the subslot.

It should be noted that the process of determining the subslot type in manner 1 to manner 3 may be performed by the terminal device, or may be performed by the network device.

For example, after receiving the configuration information, the terminal device needs to determine the subslot type of the subslot in which the feedback information is located, to determine, from the plurality of PUCCH resource sets configured by the network device, the PUCCH resource set corresponding to the subslot type, and find the feedback information in the PUCCH resource of the PUCCH resource set. The network device needs to determine subslot types of the plurality of subslots included in the slot, to determine, based on the subslot type, the PUCCH resource set configured for the subslot type, and send the configuration information to the terminal device, where the configuration information may be used to configure the plurality of PUCCH resource sets. Each of the plurality of PUCCH resource sets may correspond to one subslot type.

In a possible implementation, the communication method further includes: receiving symbol distribution information, where the symbol distribution information is used to indicate positions of an uplink symbol, a downlink symbol, and a flexible symbol included in the slot.

In this embodiment of this application, the terminal device may receive the symbol distribution information sent by the network device, and the terminal device may determine, based on the symbol distribution information, a slot pattern, that is, the positions of the uplink symbol, the downlink symbol, and the flexible symbol included in the slot. A subslot pattern is further determined based on the slot pattern and the length information of the subslot.

In the technical solutions of this application, different PUCCH resource sets may be configured based on different subslot types, and attributes of different subslots can be fully considered, so that subslots with similar features, that is, subslots of a same subslot type correspond to a same PUCCH resource set. Therefore, a large quantity of unavailable resources in the PUCCH resource set can be avoided, and redundancy overheads in downlink signaling can be reduced.

It should be noted that, in this embodiment of this application, the terminal device and the network device may first perform the communication method shown in FIG. 3 or FIG. 2, and then perform the communication method shown in FIG. 4. Alternatively, in this embodiment of this application, the terminal device and the network device may first perform the communication method shown in FIG. 3, perform the communication method shown in FIG. 4, and then perform the communication method shown in FIG. 2. In other words, the communication method performed by the terminal device and the network device may include a plurality of combination manners of the communication methods shown in FIG. 2 to FIG. 4. This is not limited in this application.

For example, the terminal device may receive the first configuration information sent by the network device, where the first configuration information may be used to configure the plurality of PUCCH resource sets including the first PUCCH resource set, and each resource set of the plurality of PUCCH resource sets may correspond to one subslot type. The terminal device may determine the second PUCCH resource set of the subslot from the first PUCCH resource set, where the second PUCCH resource set includes the available PUCCH resource of the first PUCCH resource set in the subslot, and send the feedback information for the downlink data on the available PUCCH resource in the second PUCCH resource set.

For example, the terminal device may receive the configuration information sent by the network device, where the configuration information is used to configure the first physical uplink control channel PUCCH resources set. The terminal device sends the feedback information for the downlink data on the PUCCH resource in the first PUCCH resource set, where the start symbol of the PUCCH resource is in at least one subslot of the slot; each of the at least one subslot includes at least one uplink symbol or flexible symbol, where there is a difference of M symbols between a position of the 1^{st} uplink symbol or flexible symbol of the at least one uplink symbol or flexible symbol in the subslot and a position of the start symbol of the subslot, M is a non-negative integer, and M is less than or equal to the length of the subslot. The PUCCH resource may be the available PUCCH resource determined by the terminal device from the first PUCCH resource set. That is, the PUCCH resource may be a PUCCH resource in an available second PUCCH resource set in a subslot determined from the first PUCCH resource set.

For example, the terminal device may first determine a subslot division manner, that is, each subslot in the slot may include the at least one uplink symbol or flexible symbol. There is the difference of M symbols between the position of the 1^{st} uplink symbol or flexible symbol of the at least one uplink symbol or flexible symbol in the subslot and the position of the start symbol of the subslot, M is the non-negative integer, and M is less than or equal to the length of the subslot. The terminal device receives the configuration information sent by the network device, where the configuration information may be used to configure the plurality of PUCCH resource sets including the first PUCCH resource set, and each of the plurality of PUCCH resource sets corresponds to one subslot type. The terminal device may determine the second PUCCH resource set of the subslot from the first PUCCH resource set, where the second PUCCH resource set includes the available PUCCH resource of the first PUCCH resource set in the subslot, and send the feedback information for the downlink data on the available PUCCH resource in the second PUCCH resource set.

It should be understood that the step numbers in the foregoing method embodiment are merely an example for description, and a sequence of the numbers does not indicate a sequence of performing the steps. This is not limited in this embodiment of this application.

It should be understood that the foregoing example descriptions are intended to help a person skilled in the art understand this embodiment of this application, but are not intended to limit this embodiment of this application to the specific value or the specific scenario in the examples.

The foregoing mainly describes the communication method provided in this application from a perspective of a terminal device. There is a correspondence between a processing process of a network device and that of the terminal device. For example, that the terminal device receives information from the network device means that the network device sends the information, and that the terminal device sends information to the network device means that the network device receives the information from the terminal device. Therefore, even if the processing process of the network device is not clearly described in some parts above, a person skilled in the art may clearly understand the processing process of the network device based on the processing process of the terminal device.

The foregoing describes in detail examples of the communication method according to this application. The following describes in detail a communication apparatus for implementing the foregoing communication method provided in this application. It may be understood that, to implement the foregoing functions in the foregoing communication method, the communication apparatus includes corresponding hardware structures and/or software modules for performing the functions. A person skilled in the art should easily be aware that, in combination with the examples described in the embodiments disclosed in this specification, units and algorithm steps can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this application, the communication apparatus may be divided into functional units based on the foregoing method example. For example, each functional unit may be obtained through division based on a corresponding function, or two or more functions may be integrated into one functional unit. For example, the communication apparatus may include a processing unit configured to perform a determining action in the foregoing method example, a receiving unit configured to implement a receiving action in the foregoing method example, and a sending unit configured to implement a sending action in the foregoing method example. The integrated unit may be implemented in a form of hardware, or may be implemented in a form of a software functional unit. It needs to be noted that, in this application, division of the units is an example, and is merely a logical function division. There may be another division method during actual implementation.

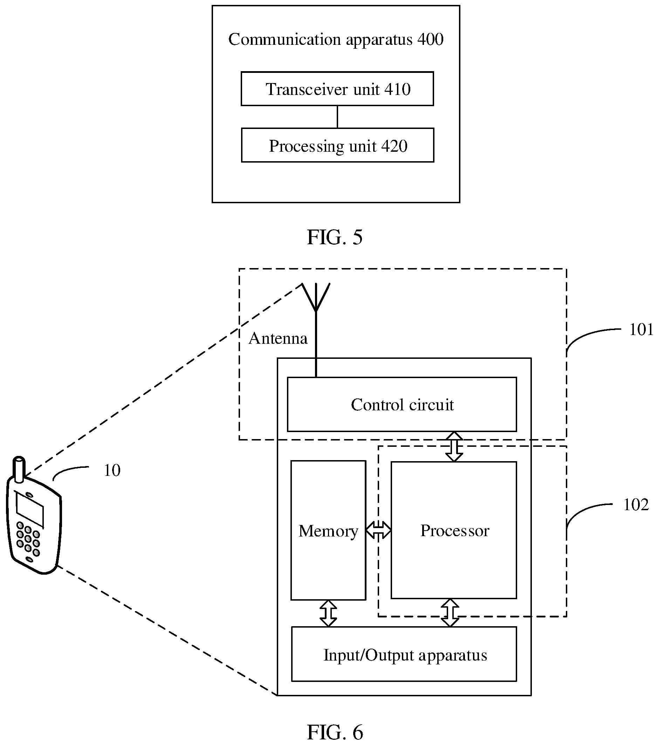

FIG. 5 is a schematic block diagram of a communication apparatus according to an embodiment of this application. As shown in FIG. 5, a communication apparatus 400 may include a transceiver unit 410 and a processing unit 420.

In a possible design, the communication apparatus 400 may correspond to the terminal device in the foregoing method embodiments, for example, the communication apparatus 400 may be a terminal device sold as a whole, or a chip configured in the terminal device. When the communication apparatus is the terminal device, the processing unit may be a processor, and the transceiver unit may be a transceiver. The communication apparatus may further include a storage unit, and the storage unit may be a memory. The storage unit is configured to store instructions, and the processing unit executes the instructions stored in the storage unit, to enable the communication apparatus to perform the foregoing method. When the communication apparatus is the chip in the terminal device, the processing unit may be a processor, the transceiver unit may be an input/output interface, a pin, a circuit, or the like. The processing unit executes instructions stored in a storage unit, to enable the communication apparatus to perform an operation performed by the terminal device in the foregoing method. The storage unit may be a storage unit (for example, a register or a cache) in the chip, or may be a storage unit (for example, a read-only memory or a random access memory) that is located outside the chip and that is in the communication apparatus.

In an implementation, the communication apparatus 400 may correspond to the terminal device in the method according to the embodiments of this application, and the communication apparatus 400 may include a unit configured to perform the method performed by the terminal device in the method in FIG. 2, FIG. 3, or FIG. 4. In addition, the units in the communication apparatus and the foregoing other operations and/or functions are intended to implement corresponding procedures of the method in FIG. 2, FIG. 3, or FIG. 4.

In a possible implementation, the transceiver unit 410 may be configured to perform step S210 and step S230 in the method shown in FIG. 2, and the processing unit 420 may be configured to perform step S220 and step S211 in the method shown in FIG. 2.

In another possible implementation, the transceiver unit 410 may be configured to perform step S310 and step S320 in the method shown in FIG. 3, and the processing unit 420 may be configured to perform step S330 and step S340 in the method shown in FIG. 3.

In another possible implementation, the transceiver unit 410 may be configured to perform step S510 in the method shown in FIG. 4, and the processing unit 420 may be configured to perform step S520 in the method shown in FIG. 4.

In another possible design, the communication apparatus 400 may correspond to the network device in the foregoing method embodiments, for example, may be the network device, or a chip disposed in the network device. When the communication apparatus is the network device, the processing unit may be a processor, and the transceiver unit may be a transceiver. The communication apparatus may further include a storage unit, and the storage unit may be a memory. The storage unit is configured to store instructions, and the processing unit executes the instructions stored in the storage unit, to enable the communication apparatus to perform the foregoing method. When the communication apparatus is the chip in the network device, the processing unit may be a processor, the transceiver unit may be an input/output interface, a pin, a circuit, or the like. The processing unit executes instructions stored in a storage unit, to enable the communication apparatus to perform an operation performed by the network device in the foregoing method. The storage unit may be a storage unit (for example, a register or a cache) in the chip, or may be a storage unit (for example, a read-only memory or a random access memory) that is located outside the chip and that is in the communication apparatus.

In an implementation, the communication apparatus 400 may correspond to the network device in the method according to the embodiments of this application, and the communication apparatus 400 may include a unit configured to perform the method performed by the network device in FIG. 2, FIG. 3, or FIG. 4. In addition, the units in the communication apparatus 400 and the foregoing other operations and/or functions are intended to implement corresponding procedures of the method in FIG. 2, FIG. 3, or FIG. 4.

In a possible implementation, the transceiver unit 410 may be configured to perform step S210 and step S230 in the method shown in FIG. 2, and the processing unit 420 may be configured to perform step S220 and step S211 in the method in FIG. 2.

In another possible implementation, the transceiver unit 410 may be configured to perform step S310 and step S320 in the method shown in FIG. 3, and the processing unit 420 may be configured to perform step S330 and step S340 in the method in FIG. 3.

In another possible implementation, the transceiver unit 410 may be configured to perform step S510 in the method shown in FIG. 4, and the processing unit 420 may be configured to perform step S520 in the method shown in FIG. 4.

The network device and the terminal device in the foregoing apparatus embodiments completely correspond to the network device and the terminal device in the method embodiments. A corresponding module or unit performs a corresponding step. For example, the transceiver unit (transceiver) performs a sending step and/or a receiving step in the method embodiments, and a step other than the sending step and the receiving step may be performed by the processing unit (processor). For a function of a specific unit, refer to a corresponding method embodiment. The transceiver unit may include a sending unit and/or a receiving unit, and the transceiver may include a transmitter and/or a receiver, to separately implement a receiving function and a sending function. There may be one or more processor.

It should be understood that division of the foregoing units is merely function division, and there may be another division method during actual implementation.

The foregoing terminal device or network device may be a chip. The processing unit may be implemented by hardware, or may be implemented by software. When the processing unit is implemented by hardware, the processing unit may be a logic circuit, an integrated circuit, or the like. When the processing unit is implemented by software, the processing unit may be a general-purpose processor, and is implemented by reading software code stored in a storage unit. The storage unit may be integrated into the processor, or may be located outside the processor and exist independently.

FIG. 6 is a schematic diagram of a structure of a terminal device 10 according to this application. For ease of description, FIG. 6 shows only main components of the terminal device. As shown in FIG. 6, the terminal device 10 includes a processor, a memory, a control circuit, an antenna, and an input/output apparatus.

The processor is mainly configured to: process a communication protocol and communication data, control the entire terminal device, execute a software program, and process data of the software program, for example, configured to support the terminal device in performing the actions described in the foregoing method embodiments. The memory is mainly configured to store the software program and data. The control circuit is mainly configured to: perform conversion between a baseband signal and a radio frequency signal, and process the radio frequency signal. A combination of the control circuit and the antenna may also be referred to as a transceiver that is mainly configured to send and receive a radio frequency signal in an electromagnetic wave form. The input/output apparatus such as a touchscreen, a display, or a keyboard is mainly configured to: receive data entered by a user, and output data to the user.

After the terminal device is powered on, the processor may read the software program in a storage unit, explain and execute instructions of the software program, and process the data of the software program. When data needs to be sent in a wireless manner, after the processor performs baseband processing on the to-be-sent data, the processor outputs a baseband signal to a radio frequency circuit. After performing radio frequency processing on the baseband signal, the radio frequency circuit sends a radio frequency signal through an antenna in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 6 shows only one memory and only one processor. In an actual terminal device, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 6 integrates functions of the baseband processor and the central processing unit. A person skilled in the art may understand that the baseband processor and the central processing unit may alternatively be independent processors, and interconnected by using a technology such as a bus. A person skilled in the art can understand that the terminal device may include a plurality of baseband processors to adapt to different network standards, the terminal device may include a plurality of central processing units to enhance a processing capability of the terminal device, and components of the terminal device may be connected by using various buses. The baseband processor may also be described as a baseband processing circuit or a baseband processing chip. The central processing unit may also be described as a central processing circuit or a central processing chip. A function of processing the communication protocol and the communication data may be built in the processor, or may be stored in the storage unit in a form of software program. The processor executes the software program to implement a baseband processing function.

For example, in this embodiment of this application, the antenna and the control circuit that have receiving function and sending function may be considered as a transceiver unit 101 of the terminal device 10, and the processor having a processing function may be considered as a processing unit 102 of the terminal device 10. As shown in FIG. 6, the terminal device 10 includes the transceiver unit 101 and the processing unit 102. The transceiver unit may also be referred to as a transceiver machine, a transceiver, a transceiver apparatus, or the like. Optionally, a component that is in the transceiver unit 101 and that is configured to implement a receiving function may be considered as a receiving unit, and a component that is in the transceiver unit 101 and that is configured to implement a sending function may be considered as a sending unit. In other words, the transceiver unit 101 includes the receiving unit and the sending unit. For example, the receiving unit may also be referred to as a receiving device, a receiver, a receiving circuit, or the like; and the sending unit may be referred to as a transmitting device, a transmitter, a transmitting circuit, or the like.

The terminal device shown in FIG. 6 may perform the actions performed by the terminal device in the foregoing methods. To avoid repetition, detailed descriptions thereof are omitted herein.

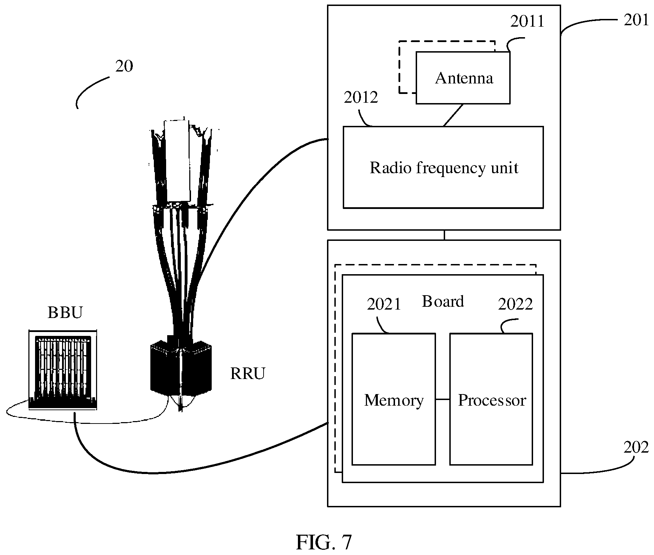

FIG. 7 is a schematic diagram of a structure of a network device according to this application. The network device may be, for example, a base station. As shown in FIG. 7, the base station may be applied to the communication system shown in FIG. 1, to perform a function of the network device in the foregoing method embodiments. The base station 20 may include one or more radio frequency units, such as a remote radio unit (remote radio unit, RRU) 201 and one or more baseband units (baseband units, BBUs) (which may also be referred to as digital units (digital units, DUs)) 202. The RRU 201 may be referred to as a transceiver unit, a transceiver, a transceiver circuit, a transceiver machine, or the like, and may include at least one antenna 2011 and a radio frequency unit 2012. The RRU 201 part is mainly configured to: receive and send a radio frequency signal, and perform conversion between a radio frequency signal and a baseband signal, for example, configured to send a BFR configuration in the foregoing method embodiments. The BBU 202 part is mainly configured to: perform baseband processing, control the base station, and the like. The RRU 201 and the BBU 202 may be physically disposed together, or may be physically separated, that is, a distributed base station.

The BBU 202 is a control center of the base station, or may be referred to as a processing unit. The BBU 202 is mainly configured to complete baseband processing functions such as channel coding, multiplexing, modulation, and spectrum spreading. For example, the BBU (the processing unit) 202 may be configured to control the base station to perform an operation procedure related to the network device in the foregoing method embodiment.

In an embodiment, the BBU 202 may include one or more boards, and a plurality of boards may jointly support a radio access network (such as an LTE network) having a single access standard, or may separately support radio access networks (for example, an LTE network, a 5G network, or another network) having different access standards. The BBU 202 further includes a memory 2021 and a processor 2022. The memory 2021 is configured to store necessary instructions and necessary data. The processor 2022 is configured to control the base station to perform a necessary action, for example, is configured to control the base station to perform an operation procedure related to the network device in the foregoing method embodiment. The memory 2021 and the processor 2022 may serve one or more boards. In other words, the memory and the processor may be separately disposed on each board. Alternatively, a plurality of boards may share a same memory and a same processor. In addition, a necessary circuit may be further disposed on each board.

In addition, the network device is not limited to the foregoing forms, and may also be in another form. For example, the network device includes a BBU and an adaptive radio unit (adaptive radio unit, ARU), or includes a BBU and an active antenna unit (active antenna unit, AAU), or may be customer premises-equipment (customer premises equipment, CPE), or may be in another form. This is not limited in this application.

It should be noted that the processor in the embodiments of this application may be an integrated circuit chip, and has a signal processing capability. In an implementation process, the steps in the foregoing method embodiments may be completed by using a hardware integrated logic circuit in the processor or instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It should be understood that, the processor in the embodiments of this application may be a central processing unit (central processing unit, CPU). The processor may further be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like.

It should further be understood that the memory in the embodiments of this application may be a volatile memory or a non-volatile memory, or may include both a volatile memory and a non-volatile memory. The nonvolatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the method provided in the embodiments of this application, this application further provides a computer program product, and the computer program product includes computer program code. When the computer program code is run on a computer, the computer is enabled to perform the method in the embodiment shown in FIG. 2, FIG. 3, or FIG. 4.

According to the method provided in the embodiments of this application, this application further provides a computer-readable medium, and the computer-readable medium stores program code. When the program code is run on a computer, the computer is enabled to perform the method in the embodiment shown in FIG. 2, FIG. 3, or FIG. 4.

According to the method provided in the embodiments of this application, this application further provides a system. The system includes the foregoing one or more terminal devices and the foregoing one or more network devices.

All or some of the foregoing embodiments may be implemented by software, hardware, firmware, or any combination thereof. When the software is used to implement the embodiments, all or some of the foregoing embodiments may be implemented in a form of a computer program product. The computer program product includes one or more computer instructions. When the computer program instructions are loaded or executed on the computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), or a semiconductor medium. The semiconductor medium may be a solid-state drive.

It should be understood that sequence numbers of the foregoing processes do not mean execution sequences in the embodiments of this application. The execution sequences of the processes should be determined based on functions and internal logic of the processes, and should not be construed as any limitation to the implementation processes of the embodiments of this application.

It should be understood that, in this application, "when", "if" and "if" both all mean that a terminal device or a network device performs corresponding processing in an objective case, but do not constitute a limitation on time, do not require that the terminal device or the network device performs a determining action during implementation, and do not mean that there is another limitation.

The term "and/or" in this specification describes only an association relationship for describing associated objects and indicates that there may be three relationships. For example, A and/or B may indicate the following three cases: Only A exists, both A and B exist, and only B exists.

The term "at least one of", "at least one type of", or "at least one item of" in this specification indicates all of or any combination of the listed items, for example, "at least one of A, B, and C" may indicate the following six cases: Only A exists, only B exists, only C exists, both A and B exist, both B and C exist, and A, B and C all exist.

It should be understood that in the embodiments of this application, "B corresponding to A" indicates that B is associated with A, and B may be determined based on A. However, it should further be understood that determining B based on A does not mean that B is determined based on only A. B may alternatively be determined based on A and/or other information.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve an objective of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, comprising:
receiving (S210), configuration information, wherein the configuration information is used to configure a first physical uplink control channel, PUCCH, resource set, and each PUCCH resource in the first PUCCH resource set is configured at a subslot-level;
determining (S220), a second PUCCH resource set of a subslot from the first PUCCH resource set, wherein the second PUCCH resource set comprises an available PUCCH resource of the first PUCCH resource set in the subslot, and a quantity of PUCCH resources in the second PUCCH resource set is less than or equal to a quantity of PUCCH resources in the first PUCCH resource set; and
sending (S230), feedback information for downlink data on the available PUCCH resource in the second PUCCH resource set,
wherein the determining (S220), a second PUCCH resource set of a subslot from the first PUCCH resource set comprises:
obtaining a first parameter, wherein the first parameter is a maximum quantity of available PUCCH resources in the second PUCCH resource set; and
determining the second PUCCH resource set from the first PUCCH resource set based on the first parameter.

2. The method according to claim 1, wherein the available PUCCH resource meets any one of the following conditions:
a symbol in which the available PUCCH resource is located is an uplink symbol or a flexible symbol;
the available PUCCH resource does not exceed a boundary of a slot in which the subslot is located;
duration of the available PUCCH resource is greater than or equal to a first threshold, wherein the first threshold corresponds to an aggregation level of a physical downlink shared channel PDCCH for scheduling the downlink data; and
a start symbol of the available PUCCH resource is later than a first time point, wherein the first time point is related to a time period required by a terminal device to process a physical downlink shared channel PDSCH that carries the downlink data.

3. The method according to claim 1 or 2, wherein the first parameter is preconfigured in a protocol or configured by a network device.

4. A communication method, comprising:
receiving (S510), configuration information, wherein the configuration information is used to configure a first physical uplink control channel, PUCCH, resource set, and the first PUCCH resource set is configured based on a first subslot type; and
sending (S520), feedback information on a PUCCH resource in the first PUCCH resource set when it is determined that a subslot in which the feedback information for downlink data is located is the first subslot type.
wherein the configuration information is used to configure a plurality of PUCCH resource sets comprising the first PUCCH resource set, the plurality of PUCCH resource sets correspond to a plurality of subslot types, and each PUCCH resource set corresponds to one subslot type; and
the sending (S520), feedback information on a PUCCH resource in the first PUCCH resource set when it is determined that a subslot in which the feedback information for downlink data is located is the first subslot type comprises:
determining that the subslot in which the feedback information is located is the first subslot type of the plurality of subslot types; and
determining, from the plurality of PUCCH resource sets, the first PUCCH resource set corresponding to the first subslot type, and sending the feedback information on the PUCCH resource in the first PUCCH resource set.

5. The method according to claim 4, wherein the determining that the subslot in which the feedback information is located is the first subslot type of the plurality of subslot types comprises:
determining, based on a quantity of uplink symbols of the subslot in which the feedback information is located, that the subslot in which the feedback information is located is the first subslot type.

6. The method according to claim 4, wherein the determining that the subslot in which the feedback information is located is the first subslot type of the plurality of subslot types comprises:
determining, based on a position of the subslot in which the feedback information is located in the slot, that the subslot in which the feedback information is located is the first subslot type.

7. The method according to claim 4, wherein the determining that the subslot in which the feedback information is located is the first subslot type of the plurality of subslot types comprises:
determining, based on a quantity of uplink symbols of the subslot in which the feedback information is located and a position of the subslot in which the feedback information is located in the slot, that the subslot in which the feedback information is located is the first subslot type.

8. The method according to any one of claims 4 to 7, further comprising:
receiving symbol distribution information, wherein the symbol distribution information is used to indicate positions of an uplink symbol, a downlink symbol, and a flexible symbol comprised in the slot.

9. A communication apparatus, configured to perform the method according to any one of claims 1 to 8.

## Patentansprüche

1. Kommunikationsverfahren, das Folgendes umfasst:
Empfangen (S210) von Konfigurationsinformationen, wobei die Konfigurationsinformationen verwendet werden, um eine erste physikalische Aufwärtsstreckensteuerkanalbetriebsmittelgruppe, PUCCH-Betriebsmittelgruppe, zu konfigurieren, und jedes PUCCH-Betriebsmittel in der ersten PUCCH-Betriebsmittelgruppe auf einem Unterzeitfensterniveau konfiguriert ist;
Bestimmen (S220) einer zweiten PUCCH-Betriebsmittelgruppe eines Unterzeitfensters von der ersten PUCCH-Betriebsmittelgruppe, wobei die zweite PUCCH-Betriebsmittelgruppe ein verfügbares PUCCH-Betriebsmittel der ersten PUCCH-Betriebsmittelgruppe in dem Unterzeitfenster umfasst und eine Anzahl von PUCCH-Betriebsmitteln in der zweiten PUCCH-Betriebsmittelgruppe kleiner als eine Anzahl von PUCCH-Betriebsmitteln in der ersten PUCCH-Betriebsmittelgruppe oder gleich dieser ist; und
Senden (S230) von Rückmeldungsinformationen für Abwärtsstreckendaten auf dem verfügbaren PUCCH-Betriebsmittel in der zweiten PUCCH-Betriebsmittelgruppe,
wobei das Bestimmen (S220) einer zweiten PUCCH-Betriebsmittelgruppe eines Unterzeitfensters von der ersten PUCCH-Betriebsmittelgruppe Folgendes umfasst:
Erhalten eines ersten Parameters, wobei der erste Parameter eine maximale Anzahl von verfügbaren PUCCH-Betriebsmitteln in der zweiten PUCCH-Betriebsmittelgruppe ist; und
Bestimmen der zweiten PUCCH-Betriebsmittelgruppe von der ersten PUCCH-Betriebsmittelgruppe anhand des ersten Parameters.

2. Verfahren nach Anspruch 1, wobei das verfügbare PUCCH-Betriebsmittel eine der folgenden Bedingungen erfüllt:
ein Symbol, in dem sich das verfügbare PUCCH-Betriebsmittel befindet, ist ein Aufwärtsstreckensymbol oder ein flexibles Symbol;
das verfügbare PUCCH-Betriebsmittel übersteigt eine Grenze eines Zeitfensters, in dem sich das Unterzeitfenster befindet, nicht;
die Dauer des verfügbaren PUCCH-Betriebsmittels ist größer als ein erster Schwellenwert oder gleich diesem, wobei der erste Schwellenwert einem Aggregationsniveau eines physikalischen gemeinsam genutzten Abwärtsstreckenkanals, PDCCH, zum Planen der Abwärtsstreckendaten entspricht; und
ein Startsymbol des verfügbaren PUCCH-Betriebsmittels ist später als ein erster Zeitpunkt, wobei sich der erste Zeitpunkt auf eine Zeitperiode bezieht, die durch eine Endgerätvorrichtung benötigt wird, um einen physikalischen gemeinsam genutzten Abwärtsstreckenkanal, PDSCH, der die Abwärtsstreckendaten überträgt, zu verarbeiten.

3. Verfahren nach Anspruch 1 oder 2, wobei der erste Parameter in einem Protokoll oder durch eine Netzvorrichtung vorkonfiguriert ist.

4. Kommunikationsverfahren, das Folgendes umfasst:
Empfangen (S510) von Konfigurationsinformationen, wobei die Konfigurationsinformationen verwendet werden, um eine erste physikalische Aufwärtsstreckensteuerkanalbetriebsmittelgruppe, PUCCH-Betriebsmittelgruppe, zu konfigurieren, und die erste PUCCH-Betriebsmittelgruppe anhand eines ersten Unterzeitfenstertyps konfiguriert ist; und
Senden (S530) von Rückmeldungsinformationen auf einem PUCCH-Betriebsmittel in der ersten PUCCH-Betriebsmittelgruppe, wenn bestimmt wird, dass ein Unterzeitfenster, in dem sich die Rückmeldungsinformationen für Abwärtsstreckendaten befinden, der erste Unterzeitfenstertyp ist;
wobei die Konfigurationsinformationen verwendet werden, um mehrere PUCCH-Betriebsmittelgruppen zu konfigurieren, die die erste PUCCH-Betriebsmittelgruppe umfassen, wobei die mehreren PUCCH-Betriebsmittelgruppen mehreren Unterzeitfenstertypen entsprechen und jede PUCCH-Betriebsmittelgruppe einem Unterzeitfenstertyp entspricht; und
wobei das Senden (S520) von Rückmeldungsinformationen auf einem PUCCH-Betriebsmittel in der ersten PUCCH-Betriebsmittelgruppe dann, wenn bestimmt wird, dass ein Unterzeitfenster, in dem sich die Rückmeldungsinformationen für Abwärtsstreckendaten befinden, der erste Unterzeitfenstertyp ist, Folgendes umfasst: Bestimmen, dass das Unterzeitfenster, in dem sich die Rückmeldungsinformationen befinden, der erste Unterzeitfenstertyp der mehreren Unterzeitfenstertypen ist; und
Bestimmen von den mehreren PUCCH-Betriebsmittelgruppen der ersten PUCCH-Betriebsmittelgruppe, die dem ersten Unterzeitfenstertyp entspricht, und Senden der Rückmeldungsinformationen auf dem PUCCH-Betriebsmittel in der ersten PUCCH-Betriebsmittelgruppe.

5. Verfahren nach Anspruch 4, wobei das Bestimmen, dass das Unterzeitfenster, in dem sich die Rückmeldungsinformationen befinden, der erste Unterzeitfenstertyp der mehreren Unterzeitfenstertypen ist, Folgendes umfasst:
Bestimmen anhand einer Anzahl von Aufwärtsstreckensymbolen des Unterzeitfensters, in dem sich die Rückmeldungsinformationen befinden, dass das Unterzeitfenster, in dem sich die Rückmeldungsinformationen befinden, der erste Unterzeitfenstertyp ist.

6. Verfahren nach Anspruch 4, wobei das Bestimmen, dass das Unterzeitfenster, in dem sich die Rückmeldungsinformationen befinden, der erste Unterzeitfenstertyp der mehreren Unterzeitfenstertypen ist, Folgendes umfasst:
Bestimmen anhand einer Position des Unterzeitfensters in dem Zeitfenster, in dem sich die Rückmeldungsinformationen befinden, dass das Unterzeitfenster, in dem sich die Rückmeldungsinformationen befinden, der erste Unterzeitfenstertyp ist.

7. Verfahren nach Anspruch 4, wobei das Bestimmen, dass das Unterzeitfenster, in dem sich die Rückmeldungsinformationen befinden, der erste Unterzeitfenstertyp der mehreren Unterzeitfenstertypen ist, Folgendes umfasst:
Bestimmen anhand einer Anzahl von Aufwärtsstreckensymbolen des Unterzeitfensters, in dem sich die Rückmeldungsinformationen befinden, und einer Position des Unterzeitfensters in dem Zeitfenster, in dem sich die Rückmeldungsinformationen befinden, dass das Unterzeitfenster, in dem sich die Rückmeldungsinformationen befinden, der erste Unterzeitfenstertyp ist.

8. Verfahren nach einem der Ansprüche 4 bis 7, das ferner Folgendes umfasst:
Empfangen von Symbolverteilungsinformationen, wobei die Symbolverteilungsinformationen verwendet werden, um Positionen eines Aufwärtsstreckensymbols, eines Abwärtsstreckensymbols und eines flexiblen Symbols, die in dem Zeitfenster enthalten sind, anzugeben.

9. Kommunikationsvorrichtung, die konfiguriert ist, das Verfahren nach einem der Ansprüche 1 bis 8 auszuführen.

## Revendications

1. Procédé de communication, comprenant :
la réception (S210) d'informations de configuration, dans lequel les informations de configuration sont utilisées pour configurer un premier ensemble de ressources de canal physique de commande de liaison montante, PUCCH, et chaque ressource PUCCH dans le premier ensemble de ressources PUCCH est configurée au niveau d'un sous-créneau ;
la détermination (S220) d'un second ensemble de ressources PUCCH d'un sous-créneau à partir du premier ensemble de ressources PUCCH, dans lequel le second ensemble de ressources PUCCH comprend une ressource PUCCH disponible du premier ensemble de ressources PUCCH dans le sous-créneau, et une quantité de ressources PUCCH dans le second ensemble de ressources PUCCH est inférieure ou égale à une quantité de ressources PUCCH dans le premier ensemble de ressources PUCCH ; et
l'envoi (S230) d'informations de rétroaction pour des données de liaison descendante sur la ressource PUCCH disponible dans le second ensemble de ressources PUCCH,
dans lequel la détermination (220) d'un second ensemble de ressources PUCCH d'un sous-créneau à partir du premier ensemble de ressources PUCCH comprend :
l'obtention d'un premier paramètre, dans lequel le premier paramètre est une quantité maximale de ressources PUCCH disponibles dans le second ensemble de ressources PUCCH ; et
la détermination du second ensemble de ressources PUCCH à partir du premier ensemble de ressources PUCCH sur la base du premier paramètre.

2. Procédé selon la revendication 1, dans lequel la ressource PUCCH disponible satisfait l'une quelconque des conditions suivantes :
un symbole dans lequel se trouve la ressource PUCCH disponible est un symbole de liaison montante ou un symbole flexible ;
la ressource PUCCH disponible ne dépasse pas une frontière d'un créneau dans lequel se trouve le sous-créneau ;
la durée de la ressource PUCCH disponible est supérieure ou égale à un premier seuil, dans lequel le premier seuil correspond à un niveau d'agrégation d'un canal physique partagé de liaison descendante PDCCH pour planifier les données de liaison descendante ; et
un symbole de début de la ressource PUCCH disponible est ultérieur à un premier point temporel, dans lequel le premier point temporel est relatif à une période temporelle nécessaire à un dispositif terminal pour traiter un canal physique partagé de liaison descendante PDSCH qui transporte les données de liaison descendante.

3. Procédé selon la revendication 1 ou 2, dans lequel le premier paramètre est préconfiguré dans un protocole ou configuré par un dispositif de réseau.

4. Procédé de communication, comprenant :
la réception (S510), d'informations de configuration, dans lequel les informations de configuration sont utilisées pour configurer un premier ensemble de ressources de canal physique de commande de liaison montante, PUCCH, et le premier ensemble de ressources PUCCH est configuré sur la base d'un premier type de sous-créneau ; et
l'envoi (S520) d'informations de rétroaction sur une ressource PUCCH dans le premier ensemble de ressources PUCCH lorsqu'il est déterminé qu'un sous-créneau dans lequel se trouvent les informations de rétroaction pour des données de liaison descendante est le premier type de sous-créneau,
dans lequel les informations de configuration sont utilisées pour configurer une pluralité d'ensembles de ressources PUCCH comprenant le premier ensemble de ressources PUCCH, la pluralité d'ensembles de ressources PUCCH correspond à une pluralité de types de sous-créneaux, et chaque ensemble de ressources PUCCH correspond à un type de sous-créneau ; et
l'envoi (S520) d'informations de rétroaction sur une ressource PUCCH dans le premier ensemble de ressources PUCCH lorsqu'il est déterminé qu'un sous-créneau dans lequel se trouvent les informations de rétroaction pour des données de liaison descendante est le premier type de sous-créneau comprend :
la détermination que le sous-créneau dans lequel se trouvent les informations de rétroaction est le premier type de sous-créneau de la pluralité de types de sous-créneaux ; et
la détermination, parmi la pluralité d'ensembles de ressources PUCCH, du premier ensemble de ressources PUCCH correspondant au premier type de sous-créneau, et l'envoi des informations de rétroaction sur la ressource PUCCH dans le premier ensemble de ressources PUCCH.

5. Procédé selon la revendication 4, dans lequel la détermination que le sous-créneau dans lequel se trouvent les informations de rétroaction est le premier type de sous-créneau de la pluralité de types de sous-créneaux comprend :
la détermination, sur la base d'une quantité de symboles de liaison montante du sous-créneau dans lequel se trouvent les informations de rétroaction, que le sous-créneau dans lequel se trouvent les informations de rétroaction est le premier type de sous-créneau.

6. Procédé selon la revendication 4, dans lequel la détermination que le sous-créneau dans lequel se trouvent les informations de rétroaction est le premier type de sous-créneau de la pluralité de types de sous-créneaux comprend :
la détermination, sur la base d'une position du sous-créneau dans lequel se trouvent les informations de rétroaction dans le créneau, que le sous-créneau dans lequel se trouvent les informations de rétroaction est le premier type de sous-créneau.

7. Procédé selon la revendication 4, dans lequel la détermination que le sous-créneau dans lequel se trouvent les informations de rétroaction est le premier type de sous-créneau de la pluralité de types de sous-créneaux comprend :
la détermination, sur la base d'une quantité de symboles de liaison montante du sous-créneau dans lequel se trouvent les informations de rétroaction et d'une position du sous-créneau dans lequel se trouvent les informations de rétroaction dans le créneau, que le sous-créneau dans lequel se trouvent les informations de rétroaction est le premier type de sous-créneau.

8. Procédé selon l'une quelconque des revendications 4 à 7, comprenant en outre :
la réception d'informations de distribution de symboles, dans lequel les informations de distribution de symboles sont utilisées pour indiquer des positions d'un symbole de liaison montante, d'un symbole de liaison descendante et d'un symbole flexible compris dans le créneau.

9. Appareil de communication, configuré pour exécuter le procédé selon l'une quelconque des revendications 1 à 8.
